# EUROPEAN PATENT APPLICATION

(11) **EP 1 625 997 A2**
(43) Date of publication of application: **15.02.2006**
(21) Application number: 05017028.1
(22) Date of filing: 04.08.2005
(51) Int. Cl.: B62L 1/00, B62L 1/10, B60T 8/54

(54) **Antilock brake system for a bicycle**

(30) Priority: 11.08.2004 CN 200410058075
(71) Applicant: Huang, Tan-Cheng, Taichung (TW)
(72) Inventor: Huang, Tan-Cheng, Taichung (TW)
(74) Representative: Wehnert, Werner

(57) **Abstract**

An antilock brake system for a bicycle is mounted to a brake mounting bracket (61) and generally comprising: brake shoe holder (20), sliding seat (30), brake shoe (40) and elastic member (50). The brake shoe holder (20) is formed with groove (22) for slidably receiving the sliding seat (30), the brake shoe (40) is disposed in the sliding seat (30), the brake shoe holder (20) is provided with an antilock slope (26), and the sliding seat (30) is correspondingly provided with a projecting slide surface (34) for abutting against the antilock slope (26); the elastic member (50) serves to retain the sliding seat (30) at an end of the brake shoe holder (20) in a rotating direction of a bicycle wheel (60) before the brake is applied.

## Description

### BACKGROUND OF THE INVENTION

### Field of the Invention

The present invention relates to an antilock brake system, and more particularly to an antilock brake system for a bicycle.

### Description of the Prior Arts

A conventional brake device for a bicycle generally includes a pair of brake shoes mounted to two legs of a brake-mounting bracket, and then the brake-mounting bracket is mounted to the rear and/or the front fork of a bicycle in such a manner that the brake shoes are located oppositely at both sides of the wheel rim of a bicycle. The brake shoes are employed to stop the rotation of the tires by pressing against the wheel rim from both sides. This kind of brake device has been commonly used nowadays, however, it still has some shortcomings as follows:

The braking force will be greater than the friction force of the tire in event of an emergency brake, because the rider has to apply a great force on the hand brake in order to stop the rotation of the tire, thus probably causing a sudden dead lock of the tire and further resulting in a skidding or overturning of the bicycle.

The present invention has arisen to mitigate and/or obviate the afore-described disadvantages of the conventional device an antilock brake system for a bicycle.

### SUMMARY OF THE INVENTION

The primary object of the present invention is to provide an antilock brake system for a bicycle. In the brake-mounting bracket are disposed sliding seat (including brake shoe) and elastic member, the brake shoe holder and the sliding seat are provided with antilock slope and sliding members (or projecting portion). In a sudden brake, when the inertial force of the bicycle is greater than the elastic force of the elastic member, the spring will push the brake shoe holder back and forth, so as to make the brake shoe disengage and press against the wheel intermittently. When the inertial force of the bicycle is less than the elastic force of the elastic member, the spring will push the sliding seat back to its original position, thus creating an antilock effect.

The secondary object of the present invention is to provide an antilock brake system for a bicycle, wherein the sliding seat, the brake shoe holder and the brake shoe are curved to conform to the curvature of the bicycle wheel, so that the brake shoe holder and the sliding seat will move in a curve that fully conforms to the rotation of the wheel.

The present invention will become more obvious from the following description when taken in connection with the accompanying drawings, which show, for purpose of illustrations only, the preferred embodiments in accordance with the present invention.

### BRIEF DESCRIPTION OF THE DRAWINGS

Fig. 1 is an exploded view of an antilock brake system for a bicycle in accordance with a first embodiment of the present invention;
Fig. 2 is a partial enlarged view of antilock brake system for a bicycle in accordance with the first embodiment of the present invention;
Fig. 3 shows the status of the antilock brake system in accordance with the first embodiment of the present invention before brake action;
Fig. 4 shows the inertial state of the brake action in accordance with the first embodiment of the present invention;
Fig. 5 shows a continuous emergency brake in accordance with the first embodiment of the present invention;
Fig. 6 shows the duration of the emergency brake action in accordance with the first embodiment of the present invention;
Fig. 7 an exploded view of an antilock brake system in accordance with a second preferred embodiment of the present invention;
Fig. 8 shows the status of the antilock brake system in accordance with the second embodiment of the present invention before brake action;
Fig. 9 shows a continuous emergency brake in accordance with the second embodiment of the present invention;
Fig. 10 an exploded view of an antilock brake system in accordance with a third preferred embodiment of the present invention;
Fig. 11 shows the status of the antilock brake system in accordance with the second embodiment of the present invention before brake action;
Fig. 12 shows the inertial state of the brake action in accordance with the third embodiment of the present invention;
Fig. 13 shows the inertial state of the brake action in accordance with the third embodiment of the present invention;
Fig. 14 shows the duration of the emergency brake action in accordance with the third embodiment of the present invention;
Fig. 15 an exploded view of an antilock brake system in accordance with a fourth preferred embodiment of the present invention;
Fig. 16 is a partial cross sectional view of an antilock brake system in accordance with a fourth preferred embodiment of the present invention;
Fig. 17 is another partial cross sectional view of an antilock brake system in accordance with a fourth preferred embodiment of the present invention;
Fig. 18 is a partial cross sectional view of an antilock brake system in accordance with a fifth preferred embodiment of the present invention;
Fig. 19 is an exploded view of an antilock brake system in accordance with a sixth preferred embodiment of the present invention;
Fig. 20 is a cross sectional view of an antilock brake system in accordance with a sixth preferred embodiment of the present invention;
Fig. 21 is an exploded view of an antilock brake system in accordance with a seventh preferred embodiment of the present invention;
Fig. 22 shows the status of the antilock brake system in accordance with the seventh embodiment of the present invention before brake action;
Fig. 23 shows the inertial state of the brake action in accordance with the seventh embodiment of the present invention;
Fig. 24 shows a continuous emergency brake in accordance with the seventh embodiment of the present invention;
Fig. 25 shows the duration of the emergency brake action in accordance with the seventh embodiment of the present invention;

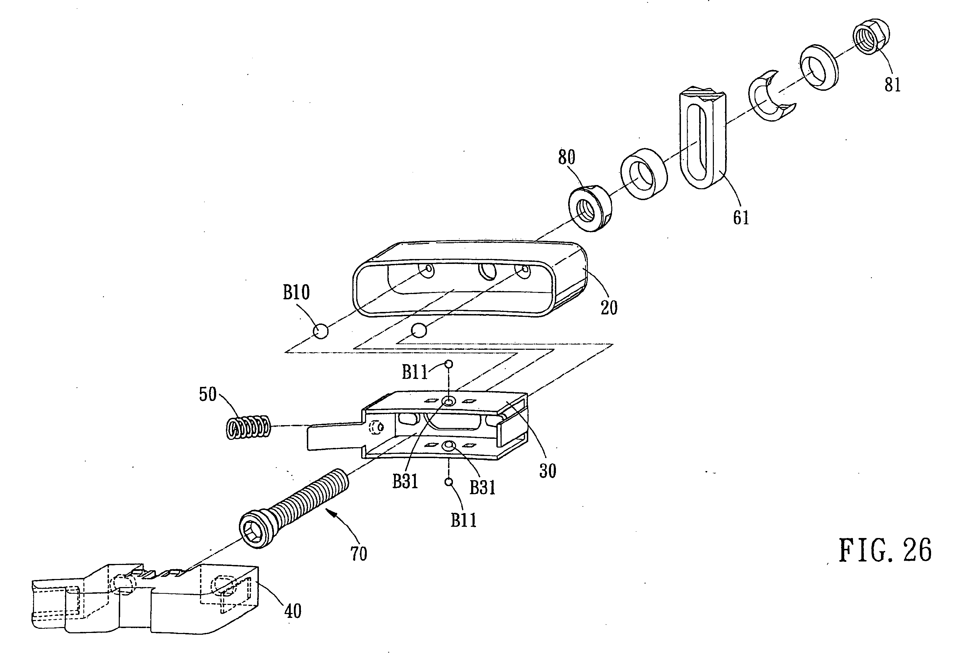

Fig. 26 is an exploded view of an antilock brake system in accordance with an eighth preferred embodiment of the present invention;
Fig. 27 is an exploded view of an antilock brake system in accordance with a ninth preferred embodiment of the present invention;
Fig. 28 is a cross sectional view of an antilock brake system in accordance with a ninth preferred embodiment of the present invention;
Fig. 29 is an exploded view of an antilock brake system in accordance with a tenth preferred embodiment of the present invention;
Fig. 30 shows the status of the antilock brake system in accordance with the tenth embodiment of the present invention before brake action;
Fig. 31 shows a continuous emergency brake in accordance with the tenth embodiment of the present invention;
Fig. 32 is an exploded view of an antilock brake system in accordance with an eleventh preferred embodiment of the present invention;
Fig. 33 shows the status of the antilock brake system in accordance with the eleventh embodiment of the present invention before brake action;
Fig. 34 shows a continuous emergency brake in accordance with the eleventh embodiment of the present invention;
Fig. 35 is an exploded view of an antilock brake system in accordance with a twelfth preferred embodiment of the present invention;
Fig. 36 shows the status of the antilock brake system in accordance with the twelfth embodiment of the present invention before brake action;
Fig. 37 shows a continuous emergency brake in accordance with the twelfth h embodiment of the present invention.

### DETAILED DESCRIPTION OF THE PREFERRED EMBODIMENTS

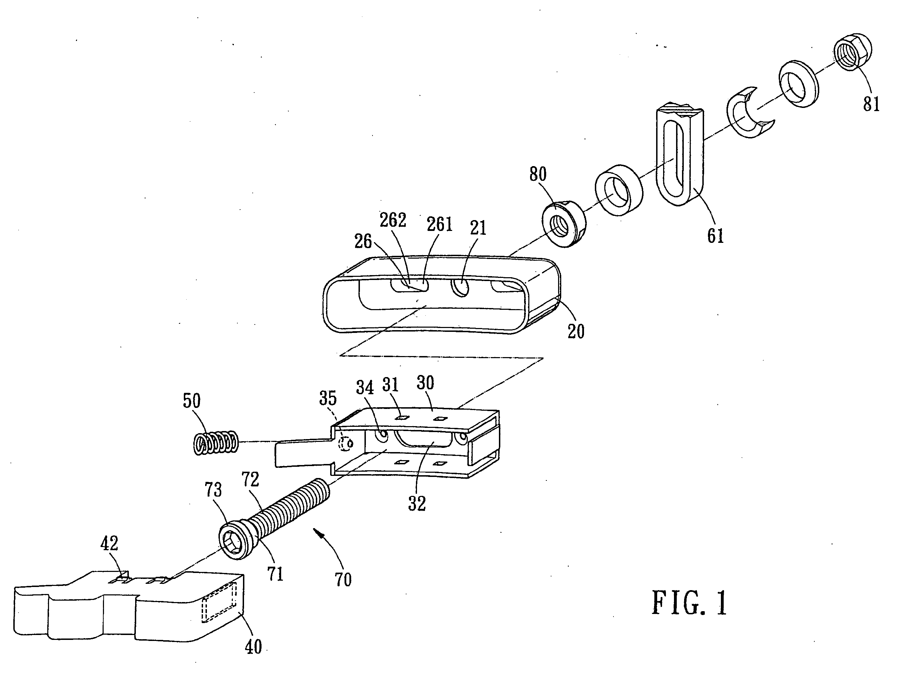

Referring to Figs. 1-3, which show an antilock brake system in accordance with a first preferred embodiment of the present invention and generally comprising: brake shoe holder 20, sliding seat 30, brake shoe 40 and spring 50 (the elastic member in this embodiment includes, but is not limited to spring).

The brake shoe holder 20 is formed with a through hole 21 which corresponds to a brake-mounting bracket 61, in the through hole 21 is inserted a bolt 70 which is formed at an end thereof with a stepped periphery 71. Next to a side of the stepped periphery 71 on the bolt 70 are formed with a plurality of outer threads 72. The bolt 70 is fixed on the brake shoe holder 20 by using the stepped periphery 71 and a first screw nut 80. And then the bolt 70 is positioned on the brake-mounting bracket 61 through a second screw nut 81. Furthermore, next to another side of the stepped periphery 71 of the bolt 70 is provided a flange 73. The brake shoe holder 20 is defined with a groove 22, on a bottom surface of the groove 22 is formed an antilock slope 26 which is gradually slanted from a shallow portion 261 to a deep portion 262 in the rotating direction of the wheel 60 of a bicycle.

The sliding seat 30 is slidably received in the groove 22 of the brake shoe holder 20 and mounted on the stepped periphery 71 of the bolt 70 via a long slot 32 and then confined in the groove 22 of the brake shoe holder 20 by the flange 73 of the bolt 70. In the sliding seat 30 is installed the brake shoe 40 which protrudes out of the groove 22 of the brake shoe holder 20 and faces toward a side of the wheel 60. On the inner wall of the sliding seat 30 are formed plural cavities 31, and the brake shoe 40 is provided with plural protrusions 42 which are employed to insert in the cavities 31 of the sliding seat 30. On the bottom of the sliding seat 30 is formed a projecting slide surface 34 which serves to abut against the bottom surface of the antilock slope 26 of the brake shoe holder 20. The sliding seat 30 is further formed with a locating protrusion 35 in a rotating direction of the wheel 60.

The spring 50 (the elastic member in this embodiment includes, but is not limited to spring) is received in the groove 22 of the brake shoe holder 20 and biased between locating protrusion 35 of the sliding seat 30 and the inner wall of the brake shoe holder 20.

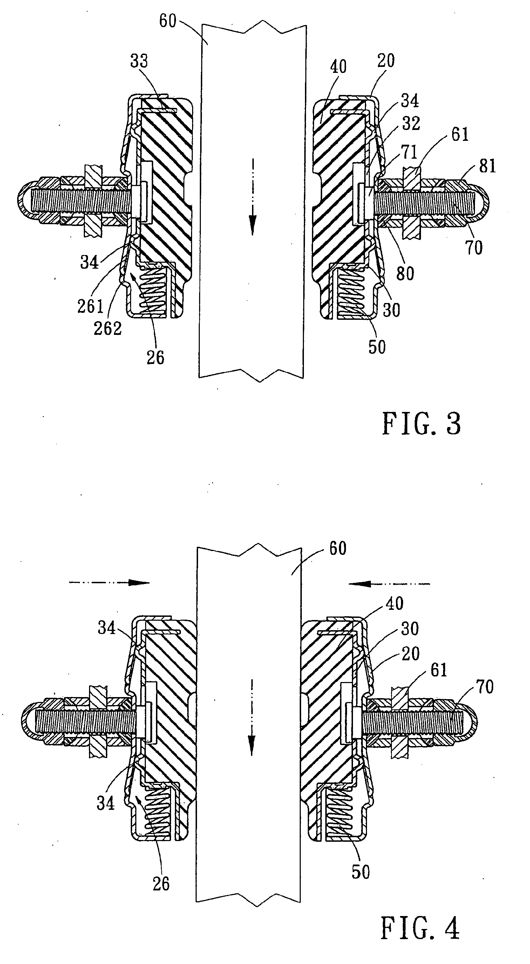

Referring further to Fig. 3, which shows the state of the antilock brake system of the present invention before brake action. At this moment, the brake mounting bracket 61 makes the brake shoe 40 stay a certain distance away from the wheel 60. The sliding seat 30 is pushed by the spring 50 to an end of the brake shoe holder 20 that is opposite to the rotating direction of the wheel 60, and the projecting slide surface 34 of the sliding seat 30 abuts against the shallow portion 261 of the antilock slope 26 of the brake shoe holder 20. Thereby, the wheel 60 is not braked (not pressed by the brake shoe 40) and can rotate smoothly.

Referring to Fig. 4, which shows the inertial state of a brake action. When the rider presses the hand brake, the brake-mounting bracket 61 will make the brake shoe holder 20 and the brake shoe 40 press against the wheel 60, while the brake shoe 40 protruded out of the groove 22 of the brake shoe holder 20 will start to rub against the wheel 60. At this moment, the wheel 60 transmits inertial stress of the bicycle to the brake shoe 40, and the brake shoe 40 transmits the inertial stress to the sliding seat 30. At this moment, the elastic force of the spring 50 between the sliding seat 30 and the brake shoe holder 20 is greater than the inertial stress of the bicycle. Thus, the sliding seat 30 will stay motionlessly in the brake shoe holder 20, whereas a slow bicycle can be stopped.

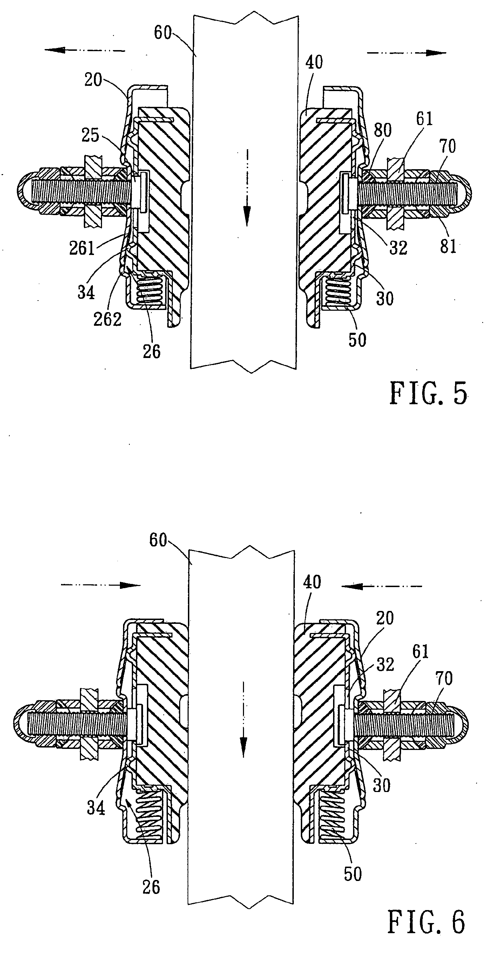

Referring to Fig. 5, which shows a continuous brake action (an emergency brake) of an antilock brake system for a bicycle. When the bicycle is running at a high speed and an emergency brake is applied, both the pressing force applied on the hand brake by the rider and the inertial force of the bicycle are very great. Thus, the sliding seat 30 starts to compress the spring 50 when the inertial force of the bicycle is greater than the elastic force of the spring 50, whereas the sliding seat 30 will move relatively in the groove 22 of the brake shoe seat 20. Meanwhile, the slot 32 of the sliding seat 30 starts to move smoothly on the stepped periphery 71 of the bolt 70. Since the projecting slide surface 34 of the sliding seat 30 slidably abuts against the antilock slope 26 of the brake shoe holder 20, and the projecting slide surface 34 slides gradually from the shallow portion 261 to the deep portion 262 of the antilock slope 26, the sliding seat 30 will slide to the deep portion 262 of the antilock slope 26 along with the projecting slide surface 34, and finally into the groove 22 of the brake shoe holder 20. At the same time, the brake shoe 40 moves backward and instantly disengages from the wheel 60. During this continuous brake action, the brake shoe 40 will press against the wheel 60 intermittently, and the intermittent brake force will not cause brake lock-up. Thus, the wheel 60 of the bicycle the rider is still stable and easily controllable at a high speed.

Referring to Fig. 6, which shows a duration of the emergency brake action. Due to the backward movement of the brake shoe 40, the friction force between the brake shoe 40 and the wheel 60 is reduced. At this moment, the inertial force of the bicycle is already less than the elastic force of the spring 50, whereas the elastic force of the spring 50 will push the sliding seat 30 and the brake shoe 40 back to their original position. Meanwhile, the sliding seat 30 will also move back in the groove 22 of the brake shoe holder 20 to its original position, and the brake shoe 40 will rub against the wheel 60 again. Thereby, the sliding seat 30 will move back and forth intermittently at the instant of the emergency brake, and the brake shoe 40 is caused to disengage from and to rub against the wheel 60 alternatively. The emergency brake of the bicycle is quickly eased off by the intermittent movement of the sliding seat 30 and the brake shoe 40, and thus the rotation of the wheel 60 is stopped and brake lock-up can be prevented. Through this way, the wheel will stop rotating not suddenly but smoothly. Thus, enabling the rider to control the steer easily.

In addition, the braking effect and the braking force of the brake system are set according to the predetermined elastic force of the elastic member, the inclination of the antilock slope 26 and the inertial force (the elastic member in this embodiment is spring 50), thus, the braking effect of the present invention can be adjusted according to the rider's needs. For example, if the bicycle is provided with a brake system which comprises a spring with strong elastic force and an antilock slope with great inclination, the braking force can be increased, the reacting speed of the brake system can be improved, and the buffering distance of the wheel can be shortened.

The lady's bicycle can be provided with a brake system which comprises a spring with weak elastic force and an antilock slope with small inclination, so as to create a smooth and stable braking effect.

It is to be noted that the brake shoe holder 20 can be replaced as whole, or the brake shoe 40 can be replaced individually (since the brake shoe 40 is assembled on the sliding seat 30 by the engagement of the protrusions 42 with the cavities 31), thus, the antilock brake system in accordance with the present invention can be replaced easily and quickly.

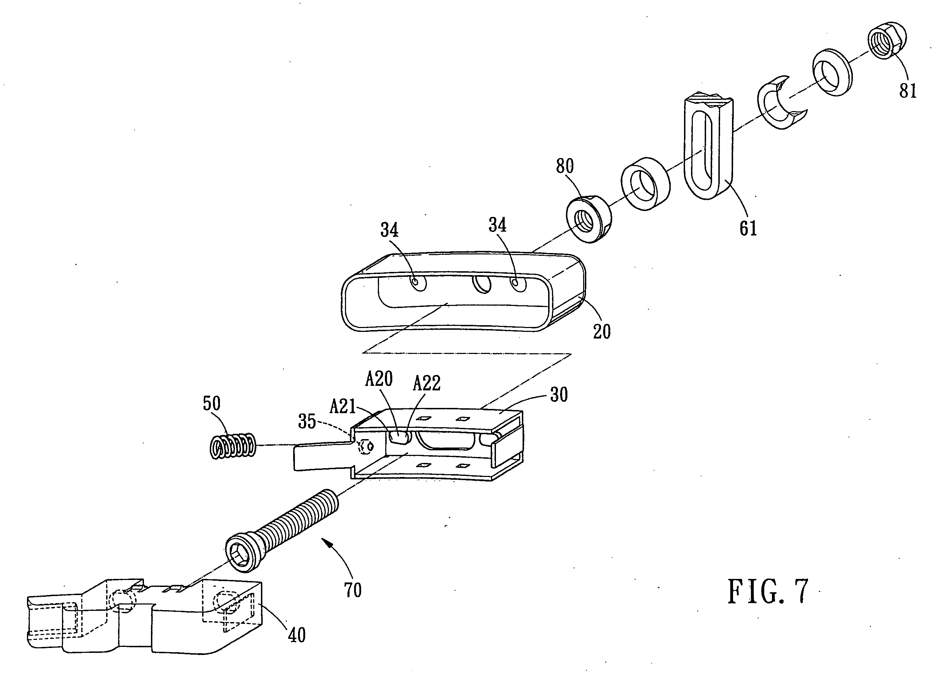

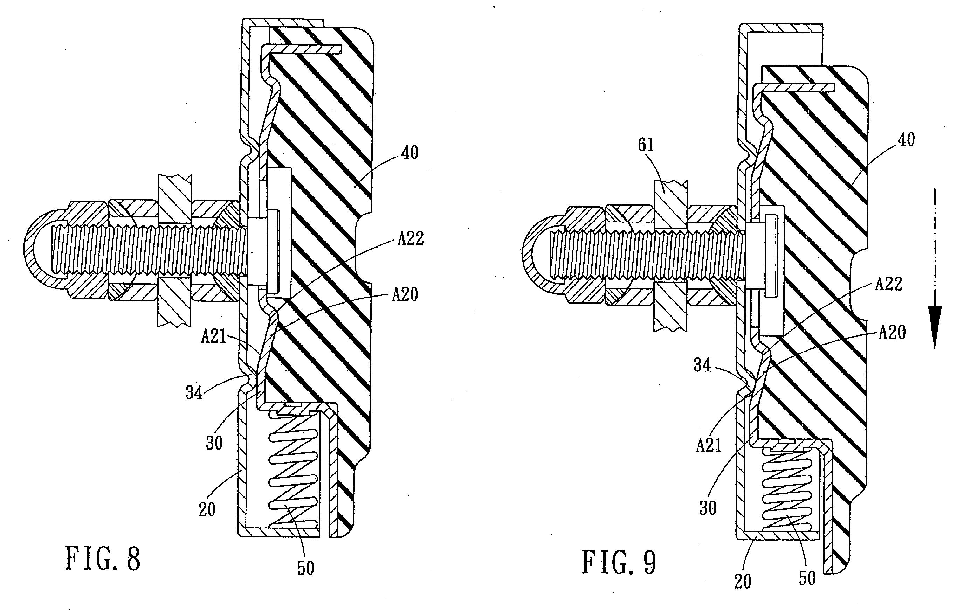

Referring to Fig. 7, which shows an antilock brake system in accordance with a second preferred embodiment of the present invention. The present invention also can be provided on the bottom surface of the sliding seat 30 with an antilock slope A20 which is also slanted from a shallow portion A21 to a deep portion A22 in the rotating direction of the wheel 60. A projecting slide surface 34 is formed on the bottom surface of the brake shoe holder 20. The braking effect of the second embodiment will be the same as the first embodiment, since only the position of the projecting slide surface and that of the antilock slope are exchanged, as shown Figs. 8 and 9.

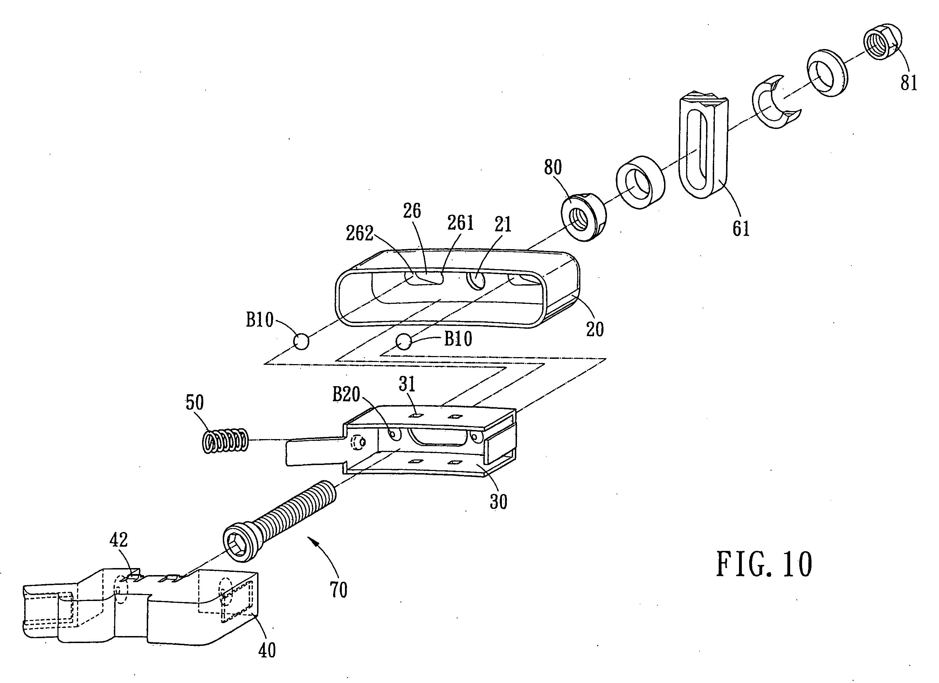

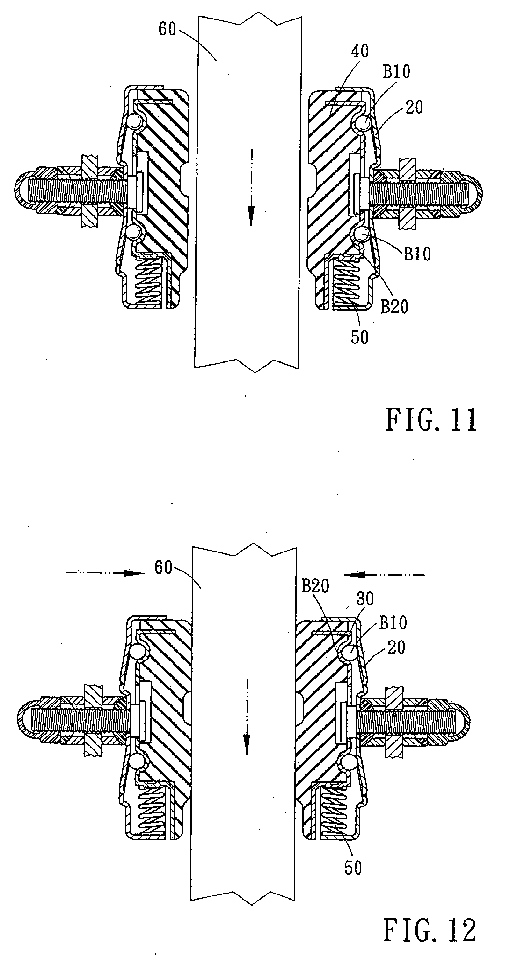

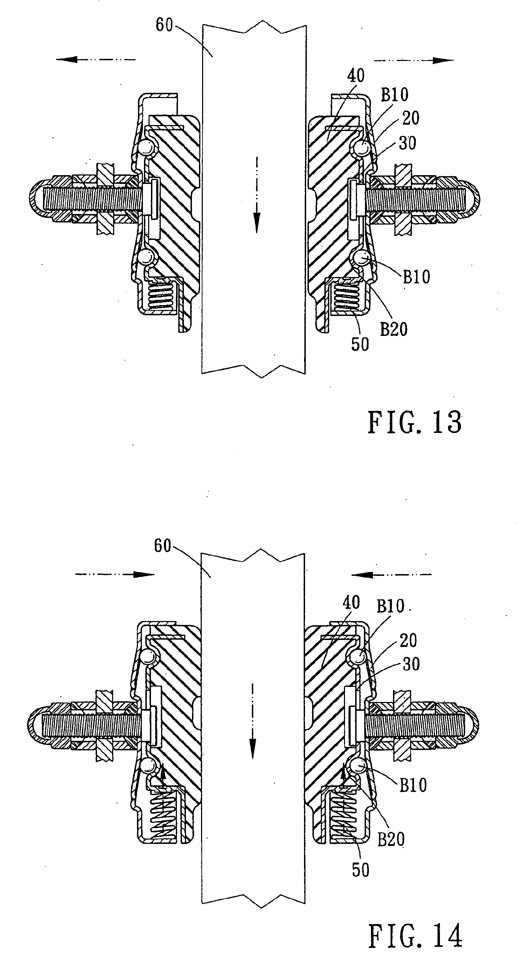

Referring to Figs. 10 and 11, which show an antilock brake system in accordance with a third preferred embodiment of the present invention. In this embodiment, the slide surface 34 of the sliding seat 30 is changed to plural recesses B20 in each of which is received a sliding member B10. The sliding member B10 serves to abut against the antilock slope 26 of the brake shoe holder 20 and the sliding member B10 can more smoothly roll thereon, thus making the sliding seat 30 slide in the groove 22 of the brake shoe holder 20 more smoothly, the operational state of this antilock brake system is shown in Figs. 11-14.

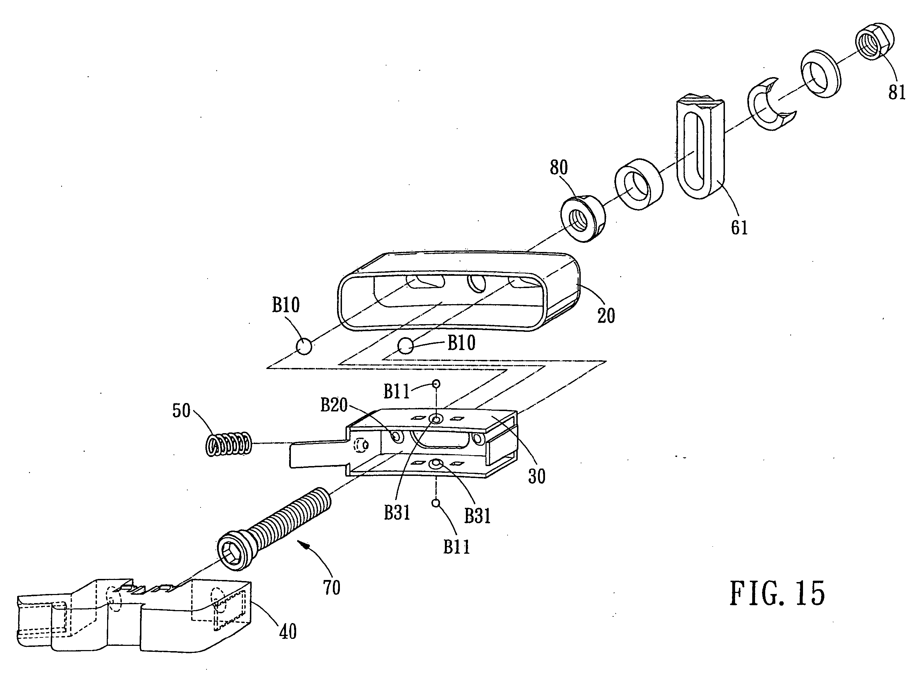

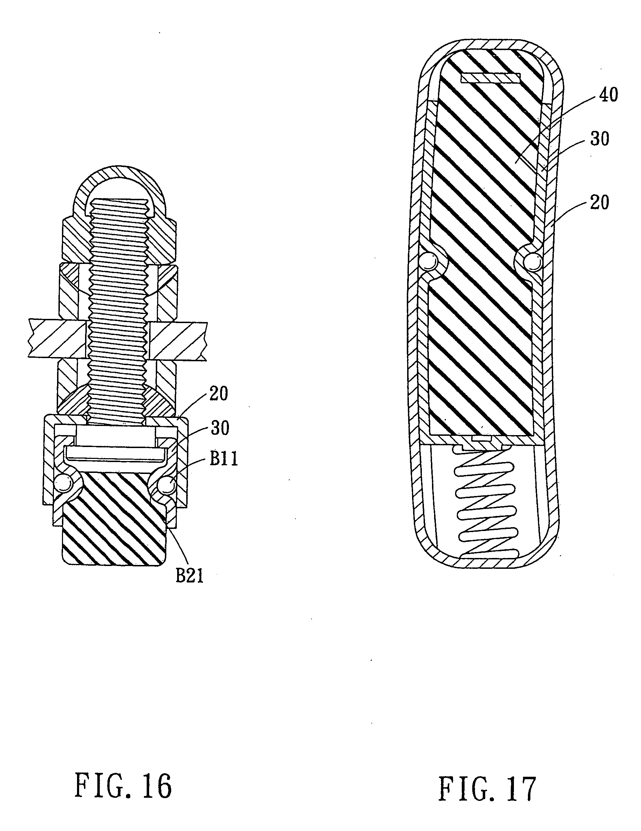

Referring to Figs. 15, 16 and 17, which show an antilock brake system in accordance with a fourth preferred embodiment of the present invention. In this embodiment, plural assistant recesses B21 and assistant sliding members B11 are provided on the sidewall of the sliding seat 30, so that the sliding seat 30 is able to slide in the groove 21 of the brake shoe holder 20 more smoothly.

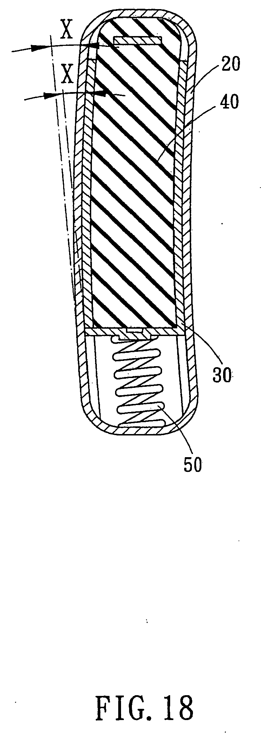

Referring to Fig. 18, which shows an antilock brake system in accordance with a fifth preferred embodiment of the present invention. The brake system of this embodiment is modified based on the brake system of the fourth embodiment, and the modifications are applicable to all the embodiments of the present invention. The brake shoe holder 20, the sliding seat 30 and the brake shoe 40, in this embodiment, are curved to conform to the radius of curvature (X) of the wheel of the bicycle, so that the brake shoe holder 20, the sliding seat 30 and the brake shoe 40 will move in a curve (X) that fully conforms to the rotation of the wheel, thus preventing deflection of the wheel from being caused in a sudden brake.

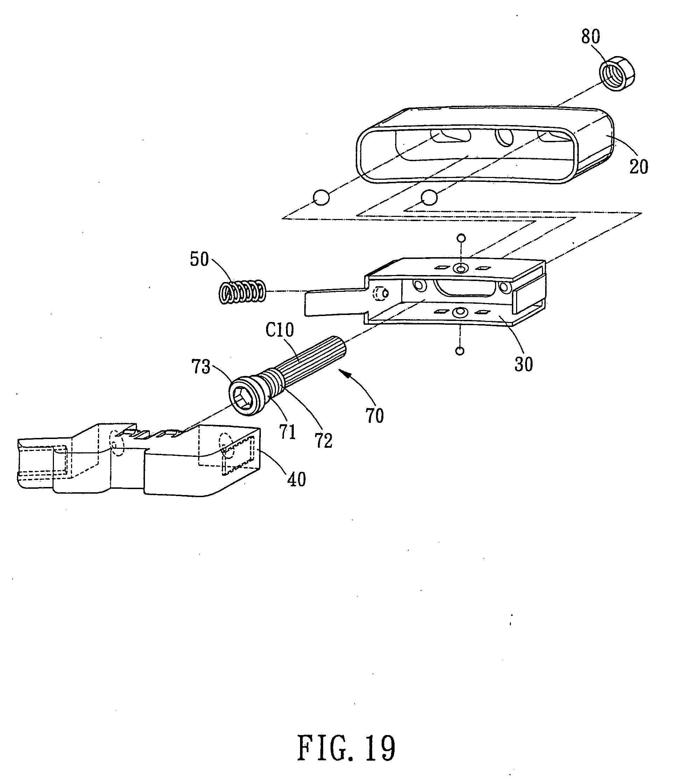

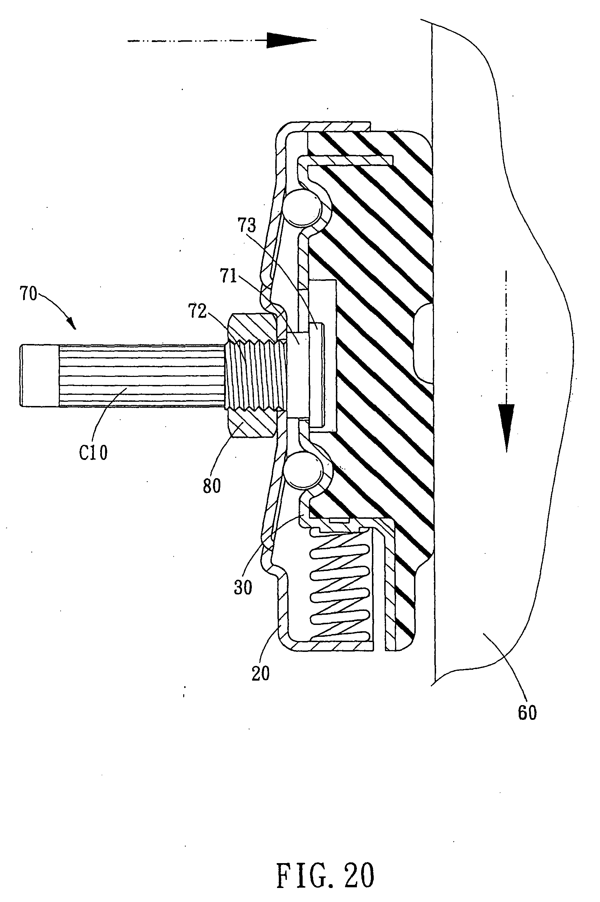

Referring to Figs. 19 and 20, which show an antilock brake system in accordance with a sixth preferred embodiment of the present invention. The brake system of this embodiment is modified based on the brake system of the fifth embodiment, and the modifications are applicable to all the embodiments of the present invention. The bolt 70 in this embodiment is also formed with a stepped periphery 71 and plural outer threads 72 located at a side of the stepped periphery 71. Through a first screw nut 80 and the stepped periphery 71, the bolt 70 is fixed with the brake shoe holder 20. A flange 73 is formed at another side of the stepped periphery 71 so as to confine the sliding seat 30 in the groove 22 of the brake shoe holder 20. The difference is that next to the outer threads 72 on the bolt 70 are formed plural straight ribs C10 for enabling the brake system to be inserted in the brake-mounting bracket directly.

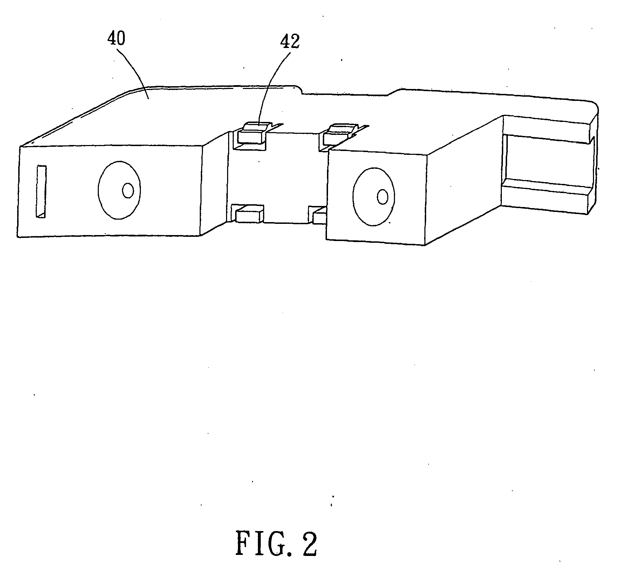

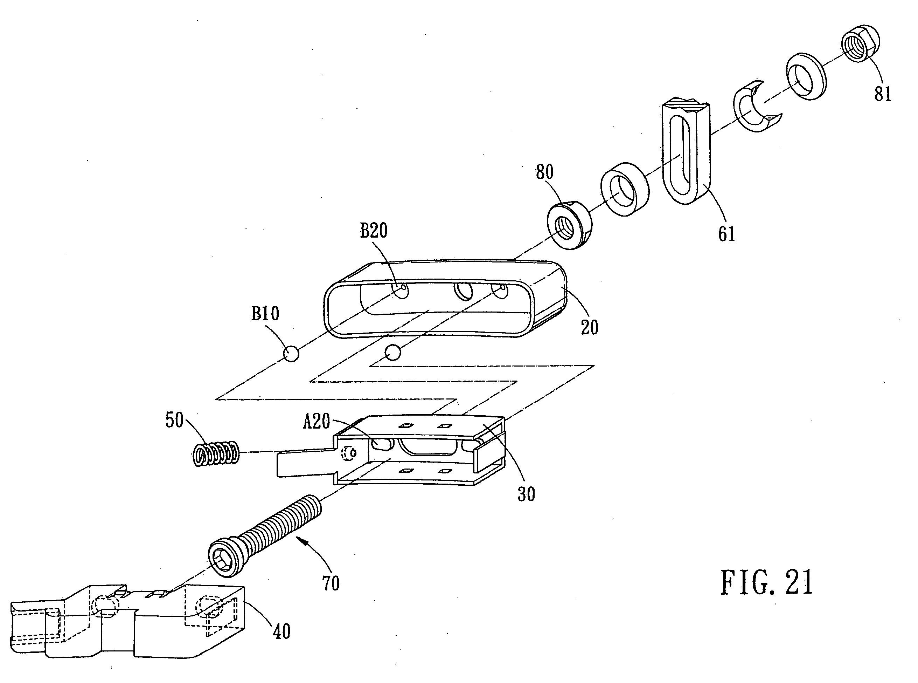

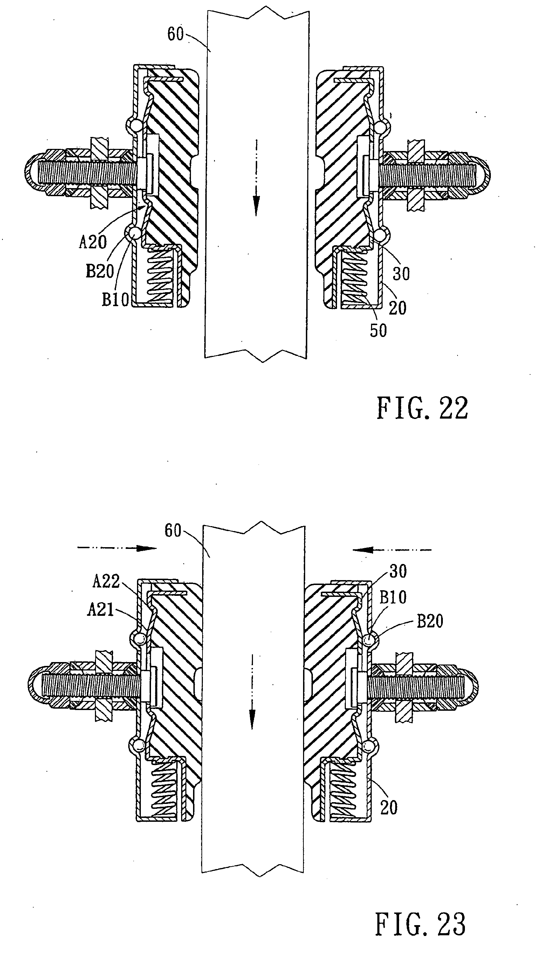

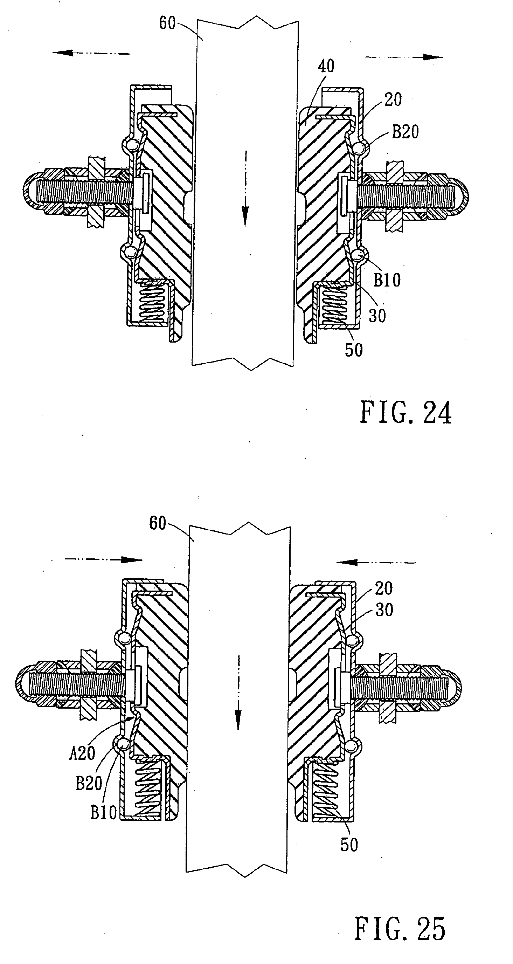

Referring to Figs. 21-25, which show an antilock brake system in accordance with a seventh preferred embodiment of the present invention. The brake system in this embodiment is the combination of the second embodiment and the third embodiment (so the reference numbers are the same as figure 2). The position of the antilock slope A20 and that of the recesses B20 are exchanged, that is to say that the recesses B20 are formed on the bottom surface of the brake shoe holder 20 for accommodation of the sliding members B10, and the antilock slope A20 is formed on the bottom surface of the sliding seat 30. Thus, the brake system also can achieve an antilock function by virtue of the cooperation of the sliding members B10, the antilock slope A20 and the spring 50.

Referring to Fig. 8, an antilock brake system in accordance with a eighth preferred embodiment of the present invention is shown and which is a new antilock brake system derived from the seventh embodiment but is additionally provided with assistant recesses B21 and assistant sliding members B11.

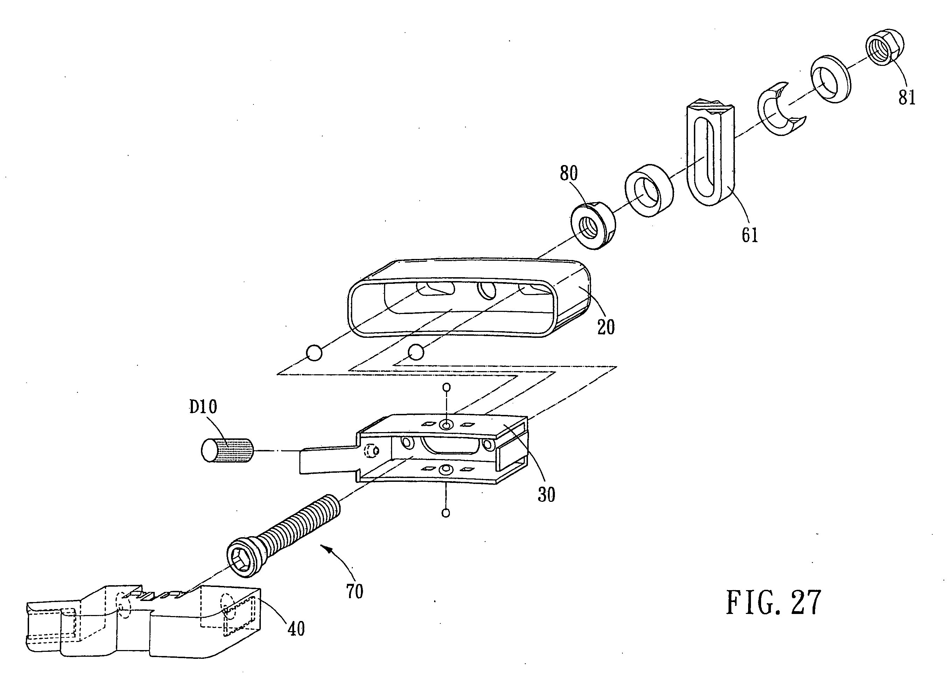

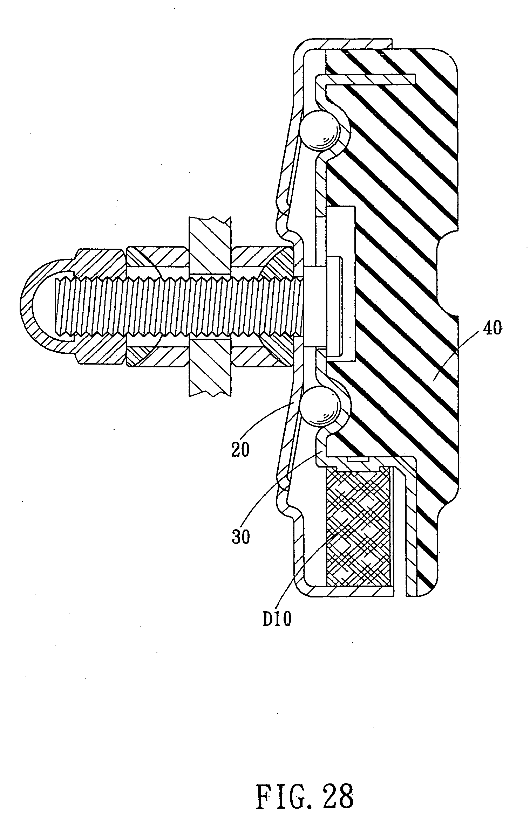

Referring to Figs. 27 and 28, which show an antilock brake system in accordance with a ninth preferred embodiment of the present invention. The brake system of this embodiment is modified based on the brake system of the fourth embodiment, and the modifications are applicable to all the embodiments of the present invention. In this embodiment, the elastic member can be plastic-made elastic member D10 which will also push the sliding seat 30 and the brake shoe 40 back to their original position when the inertial force of the bicycle is greater than the elastic force of the elastic member D10, thus creating an antilock effect.

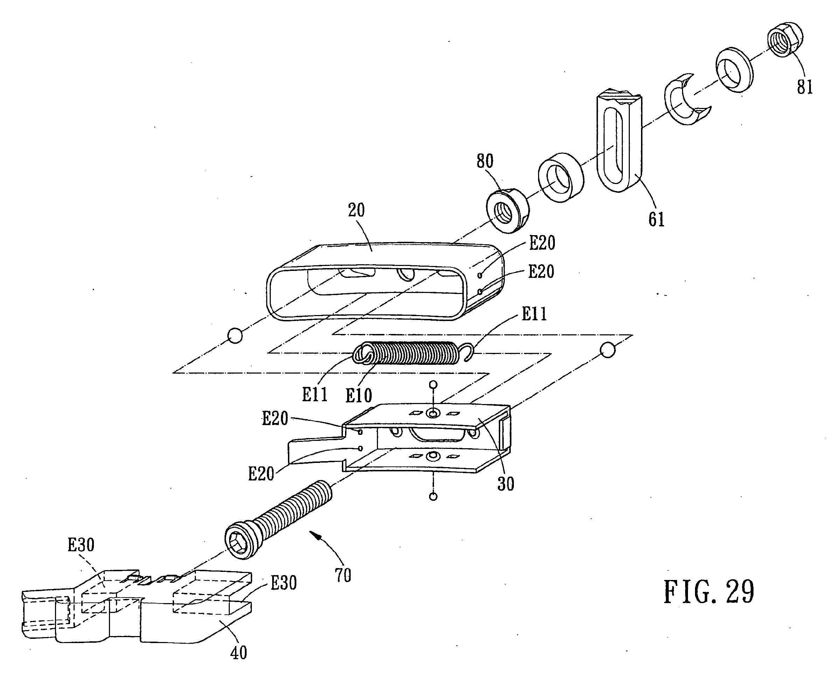

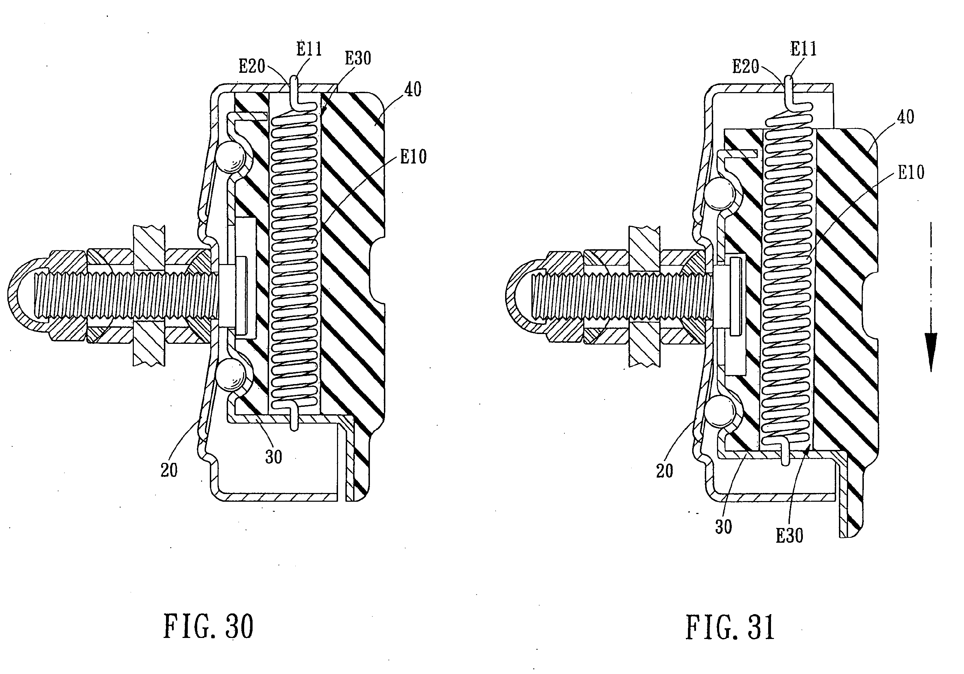

Referring to Figs. 29, 30 and 31, which show an antilock brake system in accordance with a tenth preferred embodiment of the present invention. The brake system of this embodiment is modified based on the brake system of the fourth embodiment, and the elastic member is changed to extension spring E10. On the corresponding side of the brake shoe holder 20 and the sliding seat 30 are provided a plurality of orifices E20 for positioning both hook ends E11 of the extension spring E10. A gap E30 is formed on the brake shoe 40 for reception of the extension spring E10. The extension spring E10 will retain the sliding seat 30 at an end of the brake shoe holder 20 in the rotating direction of the wheel before the brake is applied, and will also push the sliding seat 30 and the brake shoe 40 back to their original position, thus creating an antilock effect.

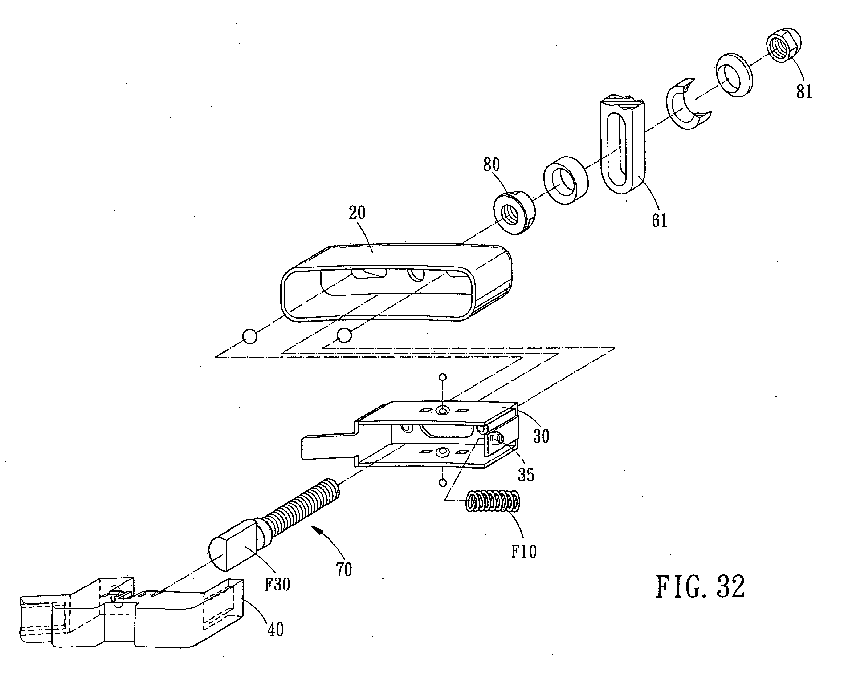

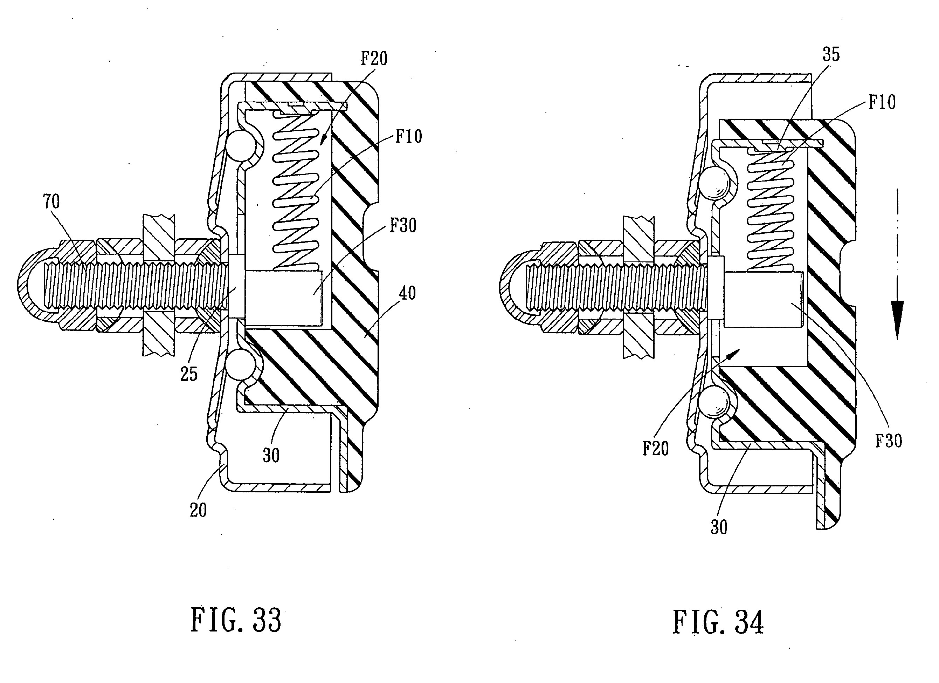

Referring to Figs. 32, 33 and 34, which show an antilock brake system in accordance with a eleventh preferred embodiment of the present invention. The brake system of this embodiment is also modified based on the brake system of the fourth embodiment. In this embodiment, a spring F10 is disposed in a gap F20 between the sliding seat 30 and the brake shoe 40. The head of the bolt 70 is changed into a stop portion F30, and on the inner wall of the sliding seat 30 is formed a locating protrusion 35 which is located in the rotating direction of the wheel 60. The spring F10 will retain the sliding seat 30 at an end of the brake shoe holder 20 in the rotating direction of the wheel before the brake is applied, and will also push the sliding seat 30 and the brake shoe 40 back to their original position, thus creating an antilock effect.

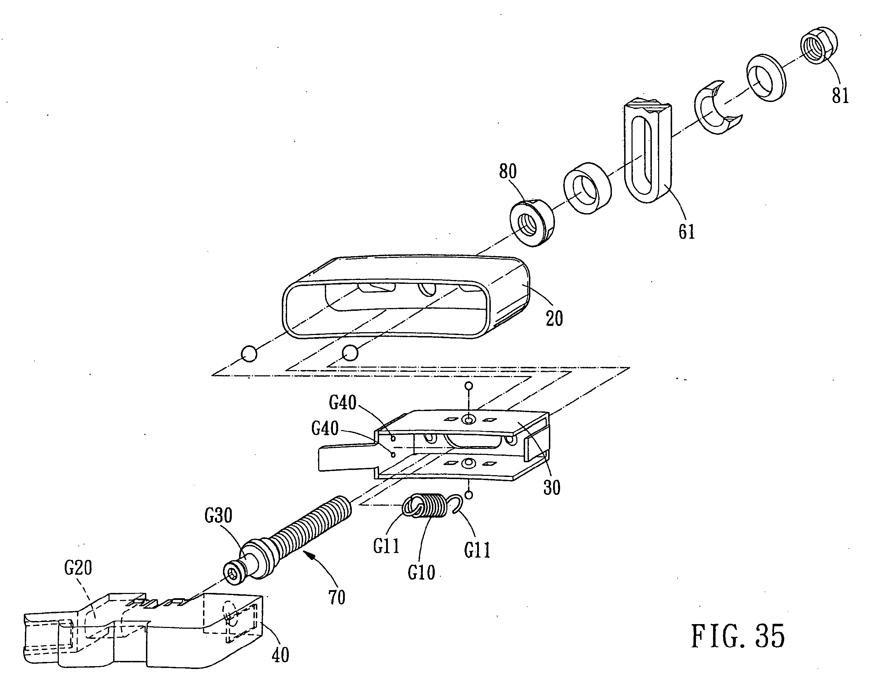

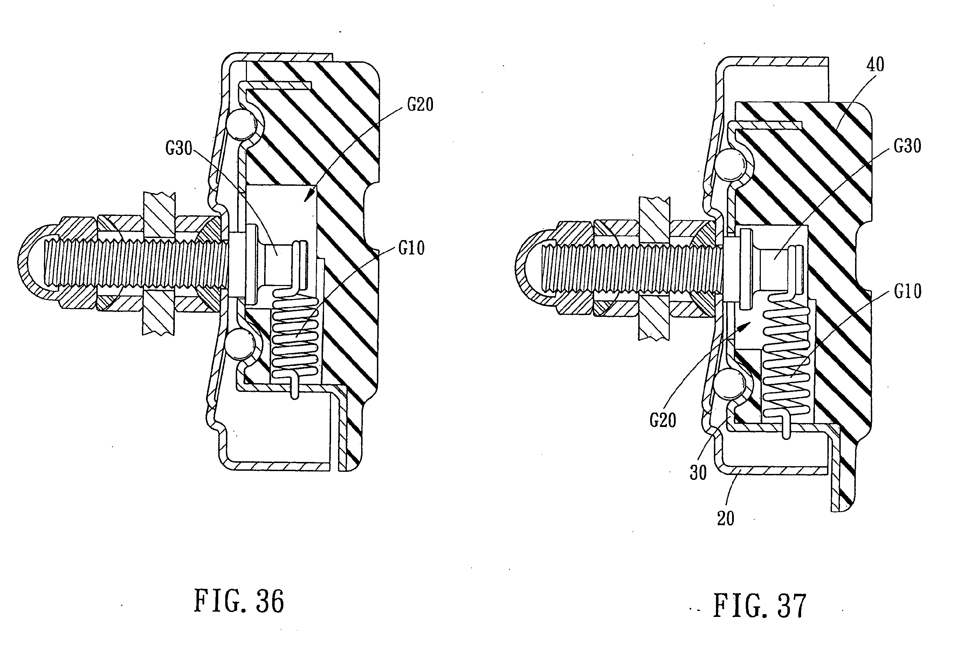

Referring to Figs. 35, 36 and 37, which show an antilock brake system in accordance with a twelfth preferred embodiment of the present invention. The brake system of this embodiment is also modified based on the brake system of the fourth embodiment. In this embodiment, the elastic member is an extension spring G10 disposed in the gap G20 between the sliding seat 30 and the brake shoe 40. At the terminal end of the bolt 70 is formed a rod G30, the sliding seat 30 is formed with orifices G40 for positioning a hook end G11 of the extension spring G10, and another hook end G11 of the extension spring G10 is fastened to the rod G30. The extension spring G10 will be compressed and expanded by the relative movement between the rod G30 and the sliding seat 30. The spring G10 will retain the sliding seat 30 at an end of the brake shoe holder 20 in the rotating direction of the wheel before the brake is applied, and will also push the sliding seat 30 and the brake shoe 40 back to their original position. Thus, the brake system in accordance with this embodiment can achieve an antilock effect.

While we have shown and described various embodiments in accordance with the present invention, it should be clear to those skilled in the art that further embodiment may be made without departing from the scope of the present invention.

## Claims

1. An antilock brake system for a bicycle mounted to a brake mounting bracket and generally comprising: brake shoe holder, sliding seat, brake shoe and elastic member;
wherein the brake shoe holder is formed with groove for slidably receiving the sliding seat, the brake shoe is disposed in the sliding seat, the brake shoe holder is provided with an antilock slope, and the sliding seat is correspondingly provided with a slide surface for abutting against the antilock slope;
the elastic member serves to retain the sliding seat at an end of the brake shoe holder in a rotating direction of a bicycle wheel before the brake is applied.

2. The antilock brake system for a bicycle as claimed in claim 1, wherein the antilock slope is formed at a bottom surface of the brake shoe holder and gradually slanted from a shallow portion to a deep portion in the rotating direction of a wheel;
the sliding seat is correspondingly provided with the projecting slide surface for abutting against the antilock slope of the brake shoe holder.

3. The antilock brake system for a bicycle as claimed in claim 1, wherein a projecting slide surface are formed at the bottom surface of the brake shoe holder;
the sliding seat is correspondingly provided with an antilock slope which is gradually slanted from the shallow portion to the deep portion in the rotating direction of a bicycle wheel, the projecting slide surface of the brake shoe holder is used to abut against the antilock slope.

4. The antilock brake system for a bicycle as claimed in claim 1, wherein the brake shoe holder and the sliding seat are curved to conform to a curvature of the bicycle wheel, so that the brake shoe holder and the sliding seat will move in a curve.

5. The antilock brake system for a bicycle as claimed in claim 1, wherein assistant sliding members are disposed between the groove of the brake shoe holder and the sliding seat for enabling the sliding seat to slide in the groove of the brake shoe holder smoothly.

6. An antilock brake system for a bicycle mounted to a brake mounting bracket and generally comprising: brake shoe holder, sliding seat, brake shoe and elastic member;
wherein the brake shoe holder is formed with groove for slidably receiving the sliding seat, the brake shoe is disposed in the sliding seat, the brake shoe holder is provided with an antilock slope, and the sliding seat is correspondingly provided with sliding members for abutting against the antilock slope;
the elastic member serves to retain the sliding seat at an end of the brake shoe holder in a rotating direction of a bicycle wheel before the brake is applied.

7. The antilock brake system for a bicycle as claimed in claim 6, wherein the antilock slope is formed at a bottom surface of the brake shoe holder and gradually slanted from a shallow portion to a deep portion in the rotating direction of a wheel;
the sliding seat is correspondingly provided with recesses, and the sliding members are disposed in the recesses of the sliding seat and employed to abut against the antilock slope of the brake shoe holder.

8. The antilock brake system for a bicycle as claimed in claim 6, wherein the sliding seat is provided with an antilock slope which is gradually slanted from the shallow portion to the deep portion in the rotating direction of a bicycle wheel,
the brake shoe holder is correspondingly provided with recesses, and sliding members are disposed in the recesses of the brake shoe holder and employed to abut against the antilock slope of the sliding seat.

9. The antilock brake system for a bicycle as claimed in claim 6, wherein the brake shoe holder and the sliding seat are curved to conform to a curvature of the bicycle wheel, so that the brake shoe holder and the sliding seat will move in a curve.

10. The antilock brake system for a bicycle as claimed in claim 6, wherein assistant sliding members are disposed between the groove of the brake shoe holder and the sliding seat for enabling the sliding seat to slide in the groove of the brake shoe holder smoothly.
